Europäisches Patentamt

European Patent Office

Office européen des brevets

(11) Publication number: **0 282 651 B1**

# EUROPEAN PATENT SPECIFICATION

(45) Date of publication of patent specification: **12.08.92**   (51) Int. Cl.⁵: **G01N 27/30**

(21) Application number: **87119278.7**

(22) Date of filing: **28.12.87**

(54) **Sheet type ion measurement electrode.**

(30) Priority: **16.03.87 JP 61633/87**

(43) Date of publication of application:
**21.09.88 Bulletin 88/38**

(45) Publication of the grant of the patent:
**12.08.92 Bulletin 92/33**

(84) Designated Contracting States:
**CH DE ES FR GB IT LI NL**

(56) References cited:
**EP-A- 0 037 701       EP-A- 0 095 946**
**EP-A- 0 230 572       US-A- 4 338 440**
**US-A- 4 549 951       US-A- 4 713 165**

(73) Proprietor: **HORIBA, LTD.**
**2 Miyanohigashi-machi Kissyoin**
**Minami-ku Kyoto(JP)**

(72) Inventor: **Tomita, Katsuhiko**
**17 Go, 8 Ban, 2-chome Kinugawa**
**Ohtsu-city Shiga-pref.(JP)**

(74) Representative: **TER MEER - MÜLLER - STEIN-**
**MEISTER & PARTNER**
**Mauerkircherstrasse 45**
**W-8000 München 80(DE)**

Rank Xerox (UK) Business Services

## Description

The present invention relates to a sheet type ion measurement electrode used for the measurement of ionic concentrations, such as the pH value.

Recently, in order to miniaturize the constructional dimensions of an electrode for measuring ionic concentrations, such as pH, for reducing the costs of production, and for improving the operation and maintenance, it has been attempted to construct an electrode in the form of a sheet.

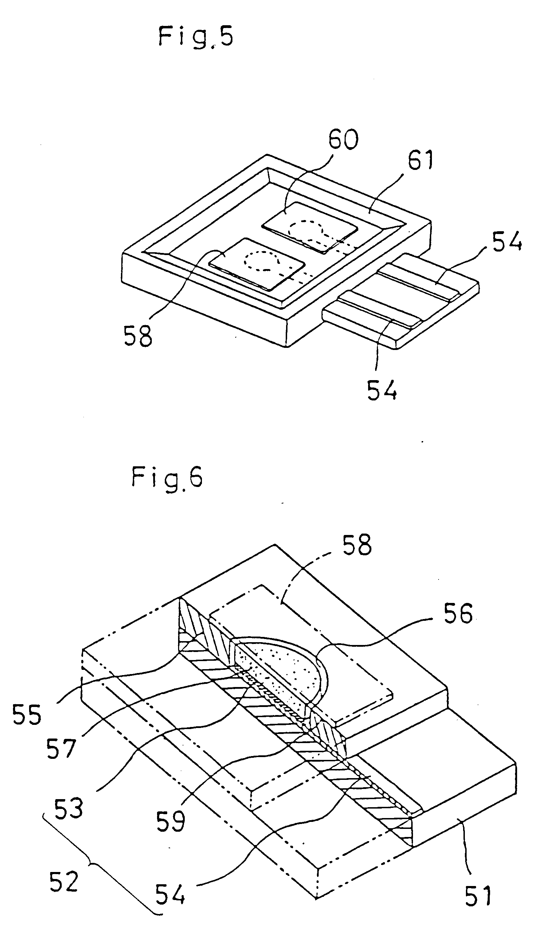

Fig. 5 shows the external appearance of such a sheet type composite electrode for the measurement of pH as disclosed in the European Patent Application 87 117 176, and Fig. 6 shows in an isometric presentation of the cross section of this measuring ion electrode. In these figures, reference numeral 51 designates a substrate formed of a material, such as polyethylene terephthalate (hereinafter referred to as PET), having a sufficiently high electrical insulating property even though it is immersed in a solution containing electrolytes. Reference numeral 52 designates an electrode formed on the upper surface of said substrate 51, said electrode 52 being formed for example by a special pretreatment and then silk screen printed with an Ag paste. A part of said electrode 52 is formed by an internal electrode portion 53 coated with an electrode material such as AgCl, and the rest of said electrode 52 is formed by a lead portion 54 as it is.

Reference numeral 55 designates a support layer provided with a through hole 56 at the place corresponding to said internal electrode portion 53 and formed of the same or a similar material as said substrate 51, such as PET. Said support layer 55 is formed on said substrate 51 such that the lead portion 54 and the circumference of the lead portion 54 are exposed.

The through hole 56 is filled with a disc type gelatinized internal solution 57 prepared by adding a gelatinizer, such as agar-agar, and gel-evaporation inhibitor, such as glycerine, to a basic internal solution obtained by adding a phosphoric acid-buffering agent to a 3.3 M aqueous solution of KCl supersaturated with for example AgCl by for example heating to obtain a paste. This paste is piled up on the internal electrode portion 54 by means of a screen printing method and the like so that the upper surface of the disc type gelatinized internal solution 57 may slightly project over the supper surface of the support layer 55.

Reference numeral 58 designates an ion-selective thin film-like response membrane. Said membrane 58 is obtained for example by dissolving polyvinyl chloride resin powders in tetrahydrofuran as a solvent, adding tri-n-octylphosphine oxide as a hydrogen ion-responsive substance to the resulting solution together with a plasticizer, sufficiently stirring the resulting mixture, and evaporating the tetrahydrofuran. Said membrane 58 is fixedly mounted on the upper surface of the support layer 55 along the circumference thereof by means of an organic high molecular adhesive 59, such as polyvinyl chloride resin adhesives or silicon adhesives, having a sufficiently high electrical insulating property as a measuring electrode so that its lower surface may adhere to the upper surface of the gelatinized internal solution 57. The inside of the through hole 56 is tightly filled with the gelatinized internal solution 57.

In addition in Fig. 5, reference numeral 60 designates a liquid junction membrane formed of an inorganic sinterd porous material, an organic high molecular porous material or the like impregnated with KCl. Said liquid junction membrane 60 is fixedly mounted on the upper surface of the support layer 55 along the circumference thereof so that its lower surface contacts the upper surface of another gelatinized internal solution (not shown), thus forming a reference electrode. The composition and internal construction of the liquid junction membrane 60 is almost the same as that of the measuring electrode shown in Fig. 6. Reference numeral 61 designates the sample solution holder portion.

With ion measurement electrodes of the above described construction, there exists the problem that adhesives capable of maintaining a complete seal between the support layer 55 and the response membrane 58 are difficult to obtain. Although polyvinyl chloride resins as organic high molecular adhesives are superior in speedy drying property, the disadvantages are that a surface coating is apt to be produced. In addition, silicon organic high molecular adhesives have the problem in stability of adhering conditions such as hardening time and viscosity. In short, with any one of organic high molecular adhesive hitherto in use a tight and complete sealing cannot be achieved.

It is an object of the present invention to provide a sheet type electrode for the measurement of ions with a response membrane providing for a complete and long-time reliable seal against a support layer which can be manufactured in mass-production.

In order to achieve the above described object, the sheet type electrode for the measurement of ions according to the present invention is characterized by a support layer 10 formed of two piled up sheet materials 11,12 having a sufficiently high electrical insulating property and a thin film-like ion-selective response membrane 22 formed by dropping an ion-selective response membrane paste 20 containing a solvent compatible with said support layer on said support layer.

It is a characterised advantage of the invention that because of the compatibility of the solvent used with the material of the support layer and that of the response membrane, a the dissolving action occurs between the solvent contained in the ion-selective response membrane paste and the support layer. The solvent is evaporated prior to the immediate diffusion thereof to form the ion-selective response membrane which is solidified so as to be integrated into the support layer. This results in the ion-selective response membrane is formed on the support layer with a satisfying and complete sealing.

The preferred embodiment of the present invention will be described below with reference to the drawings. Here, a sheet type composite electrode for the measurement of pH is given as an example.

**Fig. 1**
shows a disintegrated perspective view of a sheet type composite electrode for the measurement of pH according to the present invention;

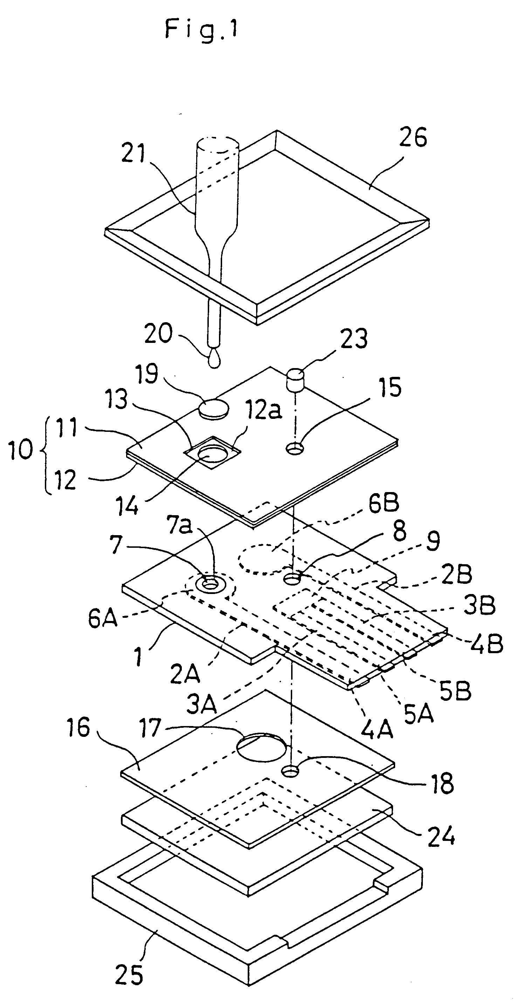

**Fig. 2**
shows a respective view of the external appearance of the electrode shown in Fig. 1;

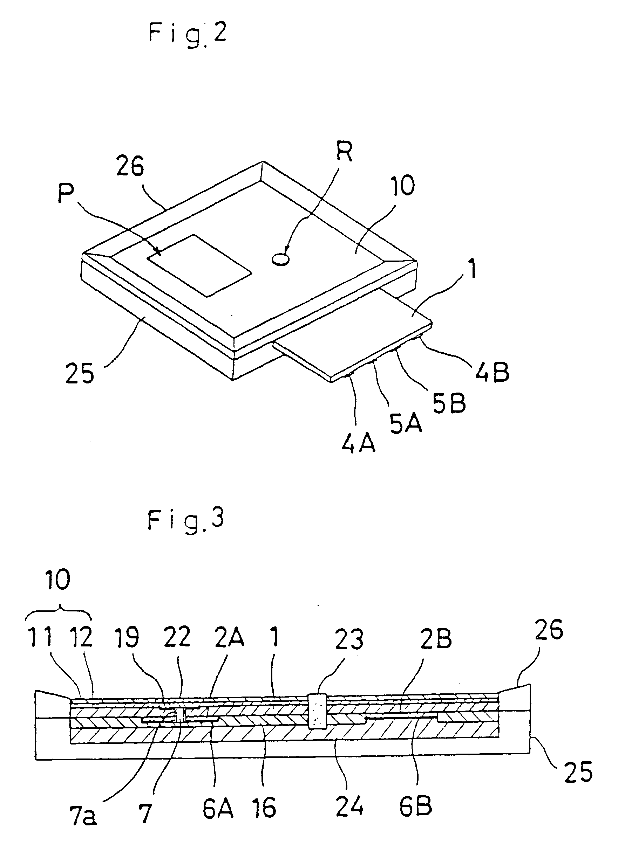

**Fig. 3**
shows a partially sectional view of Fig. 2;

**Fig. 4**
shows a partially broken perspective view of another preferred embodiment of the present invention, and

**Fig. 5 and Fig. 6**
show perspective views of prior art in selective electrode conditions.

In Figs. 1 to 3, reference numeral 1 designates a substrate formed of a material, such as polyethylene terephthalate (hereinafter referred to as PET), having a sufficiently high electric insulating property even though it is immersed in a solution containing electrolytes. In addition to PET, the substrate 1 may be formed of organic high molecular materials, such as a polyvinyl chloride resin (hereinafter referred to as PVC), polyethylene, polypropylene, acryl and polyfluoroethylene and inorganic materials, such as silica glass and pyrex glass.

The substrate 1 is provided with two pairs of electrodes, i.e. an outside pair of electrodes 2A, 2B and an inside pair of electrodes 3A, 3B formed on the lower surface thereof by adhering an electrically conductive metal selected from the group consisting of Ag, Cu, Au, Pt and the like and alloy thereof or a paste containing said metal or a semiconductor material, such as $IrO_2$ and the $SnO_2$, to the lower surface thereof by means of physical plating methods, such as vacuum vapor deposition and a CVD method, chemical plating methods, such as electrolytic methods or non-eletrolytic methods, or printing methods, such as silk screen printing, anastatic printing and flat plate printing. In this example the lower surface of the substrate 1 is subjected to a grafting process and an anchoring treatment by the use of silane coupling agent and the like and then an Ag paste is silk screen printed on the lower surface of the substrate 1.

The base end portion of each electrode 2A, 2B, 3A, 3B positioned at one edge portion of the substrate 1 is formed as the lead portions 4A, 4B, 5A, 5B as it is. The other almost circular pointed end portion of the outside pair of electrodes 2A, 2B positioned at the almost central portion of the substrate 1 is formed as sinternal electrode portions 6A, 6B coated with an electrode material, such as AgCl by physical plating methods or chemical plating methods or printing methods in the same manner as above described. An internal circular shaped electrode portion 6A (pH-measuring electrode P side) is provided with a central through hole 7, having an electrically conductive portion 7a at the inside surface and the circumference thereof and serving as a passing through electrode. A further through hole 8 is formed in the vicinity of another internal circular shaped electrode portion 6B (reference electrode R side). In addition, the inside pair of electrodes 3A, 3B are provided with a temperature compensating electrode portion 9, such as a thermistor, extending between the other pointed end portions positioned at the almost central portion of the substrate 1.

Reference numeral 10 designates a support layer formed of two sheet members 11, 12 having sufficiently high electrical insulating property which are piled up by the use of adhesives. For example, the upper sheet member 11 is formed of PET while the lower sheet member 12 is formed of PVC. This support layer 10 is obtained for example by subjecting the surface sides of both sheet members 11, 12 to be adhered to a surface treatment by printing an UV (ultraviolet ray)-setting type ink (reference numeral 12a designated a surface-treated layer) thereon semi-drying, and then pressing together both sheet members 11, 12. The sheet member 12 can overlap sheet member 11.

The upper sheet member 11 is provided with for example a square through hole 13. In addition, the lower sheet member 12 comprises for example a circular through 14 at the position corresponding to the through hole 13 which is slightly smaller than the through hole 13. These through holes 13, 14 are provided at the position corresponding to the through hole 7 extending through the internal electrode portion 6A formed in the substrate 1. In addition, a hole 15 extending through both sheet members 11, 12 is provided as such that it corresponds to the through hole 8 provided in the vicinity of the other internal electrode portion 6B formed in the substrate 1. Besides, also the upper surface of the upper sheet member 11 is subjected to a grafting process and an anchoring treatment by the use of a silane coupling agent and the like.

Reference numeral 16 designates a lower support layer formed on the lower surface side of the substrate 1. Said lower support layer 16 is formed of a material, such as PET, having a sufficiently high electrical insulating property in the same manner as substrate 1 and the support layer 10 and provided with a through hole 17 and a through hole 18 at those places which correspond to the other internal electrode portion 6B and the through hole 8, respectively, formed in substrate 1. The lower support layer 16 is formed in the same manner as the support layer 10.

Reference numeral 19 designates a gelatinized internal solution charged in the through hole 14 of the lower sheet member 12. The gelatinized internal solution 19 is obtained by adding a gelatinizer (such as agar-agar, gelatine, glue, alginic acid, and various kinds of acrylic hygroscopic polymers) and a gel-evaporation inhibitor (such as glycerine and ethylene glycol) to a basic internal solution obtained by for example adding a phosphoric acid buffering solution to a 3.3 M aqueous solution of KCl supersaturated with AgCl and formed in a disc-like shape.

The gelatinized internal solution 19 is charged by heating it to convert into a paste and screen printing the resulting paste so that its upper surface may slightly sink below the upper surface of the upper sheet member 11. The gelatinized internal solution 19 is filled in said through hole 14 and connected to the internal electrode portion 6A through the electrically conductive portion 7a of the through hole 7 formed in the internal electrode portion 6A.

Reference numeral 20 designates an ion-selective response membrane paste which is dropped onto said gelatinized internal solution 19. Said ion-selective response membrane paste 20 is obtained for example in the following manner:

(1) 2.7g PVC powder and 5.4 g ortho-nitrophenyl-octyl ether as a plasticizer are put into an Erlenmeyer flask and 90 ml tetrahydrofuran (hereinafter referred to as THF) as a solvent is added drop by drop into the Erlenmeyer flask to dissolve the PVC powder in THF. At this time, it is desired that the Erlenmeyer flask is lightly shaked to disperse suitably the PVC powder, whereby they get completely into solution.

(2) 0.135 g tri-octylphosphine oxide as a hydrogen ion-response material is dissolved in 10 ml THF as a solvent to make a solution.

(3) The solution obtained in (1) is mixed with the solution obtained in (2) by thoroughly stirring. At this time, a part of THF is evaporated to obtain the ion-selective response membrane paste 20 having a predetermined viscosity.

As shown in Figs. 1, 2 and 3 the ion-selective response membrane paste 20 obtained in the above described manner is put into a syringe 21 and then by dropping it in a predetermined quantity into the gelatinized internal solution 19, it adheres to the upper surface of the gelatinized internal solution 19 filled in the through hole 14 of the lower sheet member 12 and a part of the ion-selective response member paste 20 adheres to the sheet members 11, 12 forming the support layer 10 to generate a dissolving action between the THF as a solvent contained in the ion-selective response membrane paste 20 and the sheet members 11, 12, whereby forming an ion-selective response membrane 22 of a predetermined film thickness due to the evaporation of said THF prior to its immediate diffusion. Said membrane 22 solidifies so as to be integrated into the support layer 10, so that the ion-selective response membrane 22 is formed on the surface of the support layer 10 with a perfect seal with the support layer 10 to form the pH-measuring electrode P.

Reference numeral 23 designates a gel-immersed hydrophilic high molecular porous material to be filled into the through holes 15, 8, 18 formed in the support layer 10, the substrate 1 and the lower support layer 16, respectively. Said gel-immersed hydrophilic high molecular porous material 23 is obtained by impregnating a hydrophilic high molecular porous material, which is obtained by sintering and molding chemically stabilized hydrophilic high molecular particles, such as a sintered and molded body of an olefinic high polymer powder having a mechanical strength which is almost the same as that of polyolefine and a hydrophilicity imparted by a modifying treatment, [for example SUNFINE AQ®, manufactured by Asahi Kasei Co., Ltd.] with a gelatinized composite such as a water-containing jelly mainly comprising a Na-salt of an acrylic polymer [for example U-jelly®, manufactured by Showa Denko Co., Ltd.]. Said gelatinized composite does not deposite KCl after leaving unattended in the air and does not dry out, i.e. the wetness remains on the surface of the porous material. Said gel-immersed hydrophilic high molecular porous material 23 is filled into the through holes 15, 8, 18 so as to slightly project over the surface of the support layer 10, and functions as a liquid junction portion of the reference electrode R.

Reference numeral 24 designates a gelatinized internal solution having the same chemical composition as said gelatinized internal solution 19 which is brought into contact with the internal electrode portion 6B through the through hole 17 formed in the lower support layer 16 and brought into contact with the gel-immersed hydrophilic high molecular porous material 23. Reference numeral 25 designates a bottom case and reference numeral 26 designates a sample solution holder provided around the support layer 10.

With the above described sheet type composite electrode for the measurement of the pH the spreading area of the ion-selective response membrane paste 20 added drop by drop can be limited by using a fixed diluting amount of THF by preparing the ion-selective response membrane 22 as well as by a fixed viscosity and quantity. Thus, the ion-selective response membrane 22 having a fixed film thickness can be manufactured within several minutes, so that is possible to produce continuously a sheet type composite electrode for the measurement of ions.

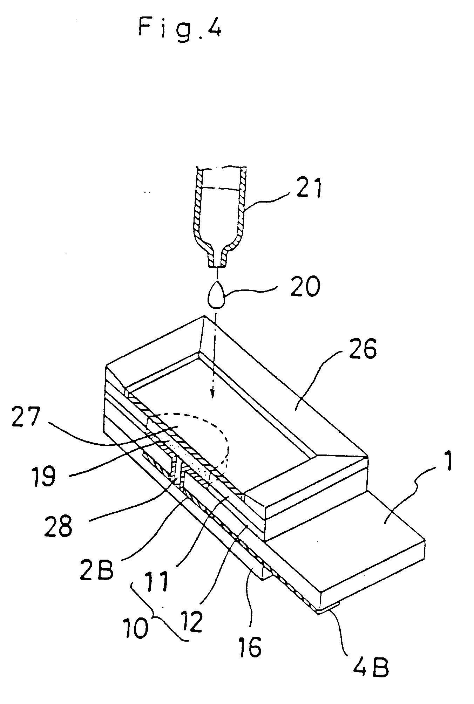

In addition, in Fig. 4 showing one example of the ion-response membrane electrode of the invention, reference numerals 27 desginates an ion-selective response membrane formed by solidifying the ion-selective response membrane paste 20. Reference numerals 28 designates a through hole electrode formed in the substrate 1 for connecting the gelatinized internal solution 19 to the lead electrode 2B.

Besides, although the piled up support layer 10 is formed of the sheet member 11 made of PET and the sheet member 12 made of PVC, both piled up sheet members 11, 12 may be made of PVC.

Furthermore, the present invention is not limited to the above described preferred embodiments, for example, the present invention can be applied also to PVC liquid membrane type ion-selective electrodes for measuring pNa, pK, pCl, pCa and the like.

As above described, according to the present invention, the support layer is formed of two piled up sheet members having a sufficiently high electrical insulating property. A thin film-like ion-selective response membrane is formed by adding drop by drop an ion-selective response membrane paste containing a solvent compatible with said support layer onto said support layer, so that the response membrane can be formed within a short time with a perfect seal with the support layer. Accordingly, a sheet type electrode for use in the measurement of ions having a stabilized quality can be manufactured in mass-production.

## Claims

1. A sheet type electrode for the measurement of ions, in which an ion-selective response membrane is formed on the upper surface side of a support layer, **characterized in** that said support layer (10) is formed of two piled up sheet materials (11, 12) having a sufficiently high electrical insulating property and said thin film-like ion-selective response membrane (22) is formed by dropping an ion-selective response membrane paste (20) containing a solvent compatible with said support layer on said support layer.

2. The sheet type electrode according to claim 1, **characterized in** that said support layer (10) is formed of a laminate comprising a sheet material formed of polyethylene terephthalate (PET) (11) and a sheet material formed of polyvinyl chloride resin (PVC) (12) overlapping said sheet material (11).

## Revendications

1. Electrode en feuillet pour la mesure d'ions, dans laquelle une membrane de réponse ionique sélective et formée sur le côté de la face supérieure d'une couche de support, caractérisé en ce que ladite couche de support (10) est formée de deux matériaux de feuillet (11, 12) possédant une qualité d'isolant électrique suffisamment élevée et ladite membrane de réponse ionique sélective (22) à film mince est formée en déposant goutte à goutte une pâte (20) de membrane de réponse ionique sélective contenant un solvant compatible avec ladite couche de support sur ladite couche de support.

2. Electrode en feuillet suivant la revendication 1, caractérisée en ce que ladite couche de support (10) est formée d'un laminé comprenant un matériau de feuillet composé de téréphtalate polyéthylène (TEP) (11) et d'un matériau de feuillet composé de résine de chlorure de polyvinyle (PVC) (12) recouvrant ledit matériau (11) de feuillet,

## Patentansprüche

1. Blattähnliche Elektrode zur Messung von Ionen, bei der eine ionenselektive Ansprechmembran auf der oberen Oberflächenseite einer Trägerschicht ausgebildet ist, **dadurch gekennzeichnet,** daß die Trägerschicht (10) aus zwei aufgeschichteten Blattmaterialien (11, 12) mit einer ausreichend hohen elektrischen Isolierfähigkeit gebildet und die dünne filmförmige ionenselektive Ansprechmembran (22) durch Auftropfen einer ionenselektiven Ansprechmembranpaste (20), die ein mit der Trägerschicht verträgliches Lösungsmittel enthält, auf die Trägerschicht gebildet sind.

2. Blattähnliche Elektrode nach Anspruch 1, **dadurch gekennzeichnet,** daß die Trägerschicht (10) aus einem Laminat, umfassend ein aus Polyethylenterephthalat (PET) (11) gebildetes Blattmaterial und ein aus Polyvinylchloridharz (PVC) (12) gebildetes Blattmaterial, welches das Blattmaterial (11) überlappt, gebildet ist.

# Fig.1

Fig.2

Fig.3

Fig.4

Fig.5

Fig.6